# EUROPEAN PATENT SPECIFICATION

(11) **EP 1 564 047 B1**
(45) Date of publication and mention of the grant of the patent: **10.01.2007**
(21) Application number: 05002979.2
(22) Date of filing: 11.02.2005
(51) Int. Cl.: B60H 1/00

(54) **Automotive air-conditioning system**
Fahrzeugklimaanlage
Système de climatisation de véhicule

(30) Priority: 16.02.2004 JP 2004038713
(43) Date of publication of application: 17.08.2005
(73) Proprietor: Calsonic Kansei Corporation, Tokyo 164-8602 (JP)
(72) Inventor: Ezaki, Hiroshi, Nakano-ku Tokyo 164-8602 (JP); Yamada, Akio, Nakano-ku Tokyo 164-8602 (JP); Ogawara, Masaki, Nakano-ku Tokyo 164-8602 (JP)
(74) Representative: Grünecker, Kinkeldey, Stockmair & Schwanhäusser Anwaltssozietät

(56) References cited:
- FR-A- 2 778 152
- US-A1- 2003 116 303
- US-A1- 2003 205 370
- US-B1- 6 230 795

## Description

The present invention relates to an automotive air-conditioning system according to the preamble of independent claim 1.

An automotive air-conditioning system disclosed in Japanese Unexamined Patent Application Publication No. H11-11135 is configured to allow cooled air to flow linearly from a bypass passage through an air mixing chamber into a vent outlet passage. Although made compact, the system can thus maintain its maximum performance in discharging cooled air through the vent outlet passage.

However, since importance is attached to the maximum performance in discharging cool air through the vent outlet passage as described above, a hot air passage downstream of a heater is curved from the heater toward the air mixing chamber. This formation increases the airflow resistance of hot air, reducing the maximum performance in discharging hot air, and is likely to increase the circulating noise of hot air.

Rear outlet passages including a rear foot outlet passage and a rear vent outlet passage diverge from the air mixing chamber located near the upper bodies of the front seat occupants, toward the rear seats. For this, they are also curved downstream of the air mixing chamber. When hot air flows from the hot air passage, through the air mixing chamber and the rear outlet passages, toward the rear seats, the airflow receives further increased resistance, and the above problems are more noticeable.

An automotive air-conditioning system as indicated above can be taken from the closest prior art document US 2003/0116303 A1. In particular, said air-conditioning system comprises a casing that accommodates a heater core. Downstream of said heater core, an air passage is provided which transmits heated air towards a defrost and vent opening associated to the front upper part of the passenger compartment. An upstream part of said air passage is connected to a further air passage being arranged parallel to said air passage and routed to a floor opening. Said floor opening is also connected to a communication path directly associated to the area directly downstream of the evaporator. Said communication path is provided with a floor door in order to control air flow therethrough. Accordingly, hot air can be directly transmitted to the floor opening through the communication path in case the floor door is opened, wherein a further air flow stream can be supplied to the floor opening through the additional air path.

It is an objective of the present invention to provide an automotive air-conditioning system as indicated above, wherein reduced airflow resistance of hot air can be achieved.

According to the subject matter of the present invention, said objective is solved by an automotive air-conditioning system having the features of independent claim 1.

Preferred embodiments are laid down in the dependent claims.

Hereinafter, the present invention is illustrated and explained by means of preferred embodiments in conjunction with the accompanying drawings, wherein:
FIG. 1 is a side view of an automotive air-conditioning system in an embodiment of the present teaching;
FIG. 2 is a plan view of an air-conditioning unit in the automotive air-conditioning system;
FIG. 3 is an elevation view of a part of the air-conditioning unit in the automotive air-conditioning system;
FIG. 4 is a cross-sectional view of the air-conditioning unit in the automotive air-conditioning system taken along line SA-SA in FIG. 3;
FIG. 5 is a cross-sectional view of the air-conditioning unit in the automotive air-conditioning system taken along line SB-SB in FIG. 3;
FIG. 6 is a cross-sectional view of the air-conditioning unit in the automotive air-conditioning system taken along line SC-SC in FIG. 3;
FIG. 7 is a partially exploded perspective view of the air-conditioning unit in the automotive air-conditioning system;
FIGS. 8A to 8C are schematic diagrams illustrating the flow of conditioned air in a vent mode in the automotive air-conditioning system; FIG. 8A is a cross-sectional view taken along line SA-SA in FIG. 3; FIG. 8B is a cross-sectional view taken along line SB-SB in FIG. 3; and FIG. 8C is a cross-sectional view taken along line SC-SC in FIG. 3;
FIGS. 9A to 9C are schematic diagrams illustrating the flow of conditioned air in a bi-level mode in the automotive air-conditioning system; FIG. 9A is a cross-sectional view taken along line SA-SA in FIG. 3; FIG. 9B is a cross-sectional view taken along line SB-SB in FIG. 3; and FIG. 9C is a cross-sectional view taken along line SC-SC in FIG. 3;
FIGS. 10A to 10C are schematic diagrams illustrating the flow of conditioned air in a foot mode in the automotive air-conditioning system; FIG. 10A is a cross-sectional view taken along line SA-SA in FIG. 3; FIG. 10B is a cross-sectional view taken along line SB-SB in FIG. 3; and FIG. 10C is a cross-sectional view taken along line SC-SC in FIG. 3;
FIGS. 11A to 11C are schematic diagrams illustrating the flow of conditioned air in a defroster-foot mode in the automotive air-conditioning system; FIG. 11A is a cross-sectional view taken along line SA-SA in FIG. 3; FIG. 11B is a cross-sectional view taken along line SB-SB in FIG. 3; and FIG. 11C is a cross-sectional view taken along line SC-SC in FIG. 3; and
FIG. 12A to 12C are schematic diagrams illustrating the flow of conditioned air in a defroster mode in the automotive air-conditioning system; FIG. 12A is a cross-sectional view taken along line SA-SA in FIG. 3; FIG. 12B is a cross-sectional view taken along line SB-SB in FIG. 3; and FIG. 12C is a cross-sectional view taken along line SC-SC in FIG. 3.

An embodiment of the present teaching will be described below with reference to the drawings.

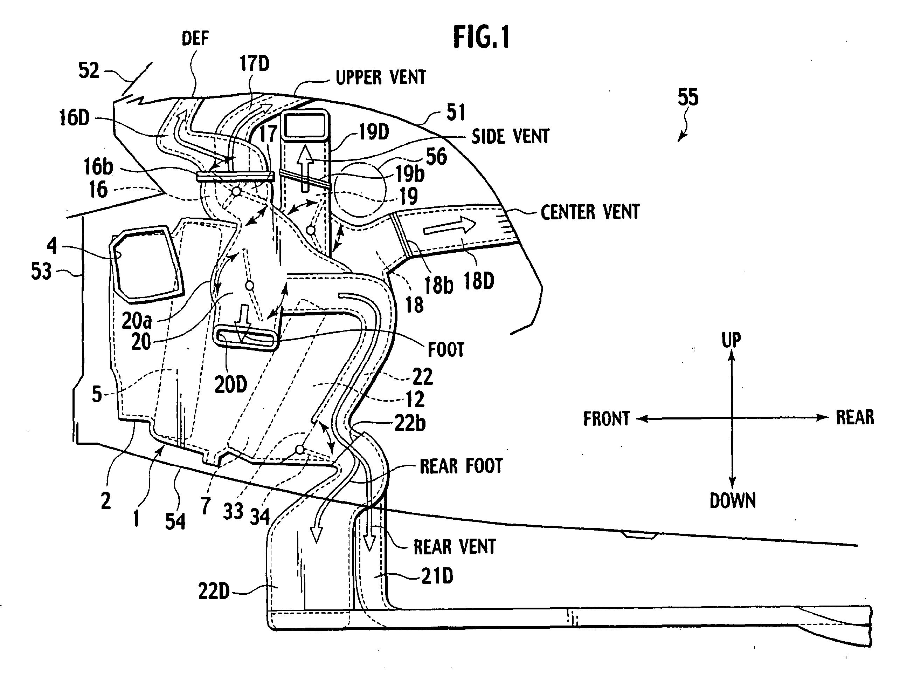

In FIG. 1, reference numeral 51 denotes an instrument panel; 52, a windshield; 53, a dash panel; 54, a floor tunnel; and 55, a passenger compartment. As shown in FIG. 1, an automotive air-conditioning system includes an intake box (not shown) for selectively taking in inside and outside air, a blower (not shown) for sending air from the intake box downstream, and an air-conditioning unit 1 for conditioning the air from the blower and discharging it into the passenger compartment 55.

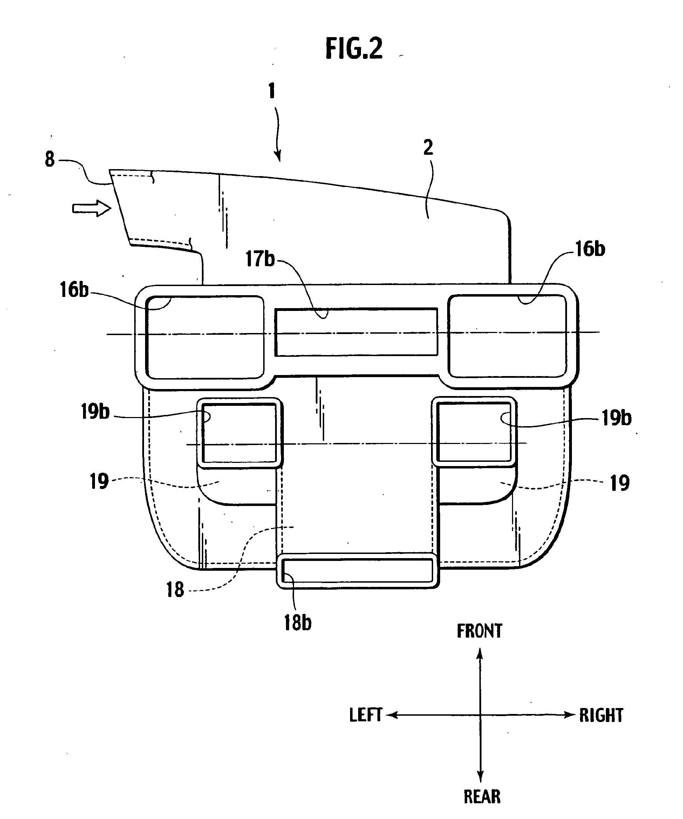

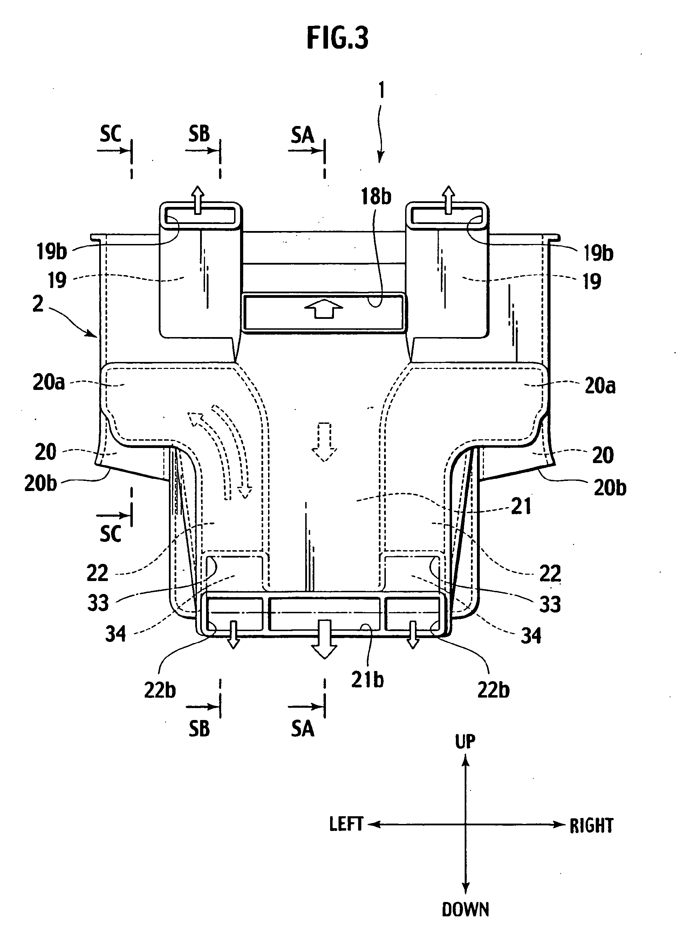

The air-conditioning unit 1 includes an air-conditioning case 2 in which an air passage is formed. The air-conditioning unit 1 is disposed at the center of the vehicle width within the instrument panel 51. An inlet 4 as an upstream end of the air passage and outlets 16b to 22b as downstream ends of the air passage are formed in the air-conditioning case 2 (see FIGS. 2 and 3). Outlet ducts 16D to 22D are connected to the respective outlets 16b to 22b. Air conditioned in the air-conditioning unit 1 is discharged through the outlet ducts 16D to 22D connected to the outlets 16b to 22b into the passenger compartment 55.

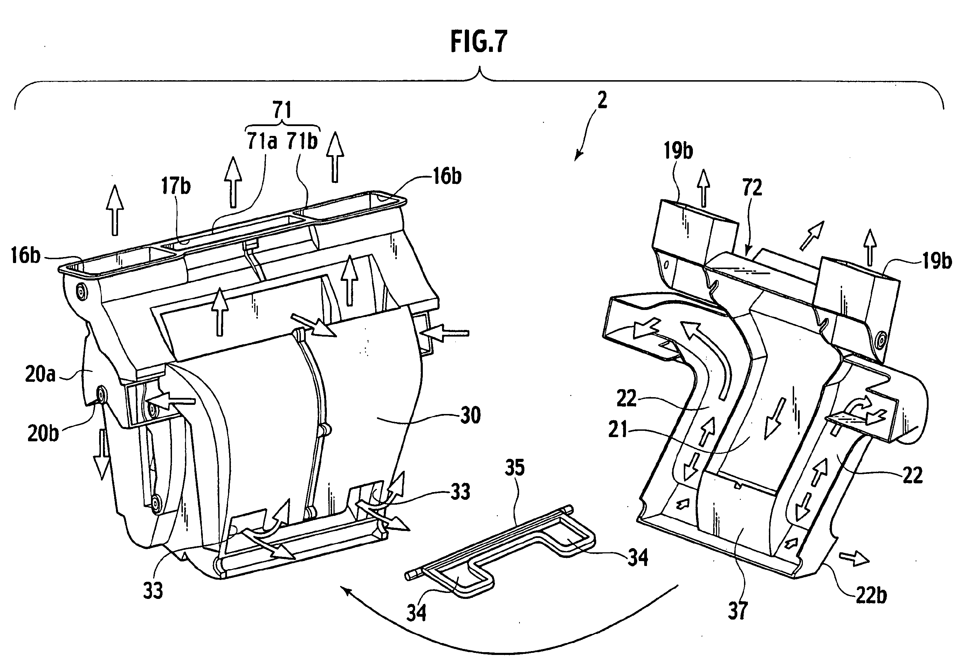

As shown in FIG. 7, the air-conditioning case 2 in this embodiment is composed of a main case 71 and a sub case 72. The main case 71 has case halves 71a, 71b joined with a hollow therebetween.

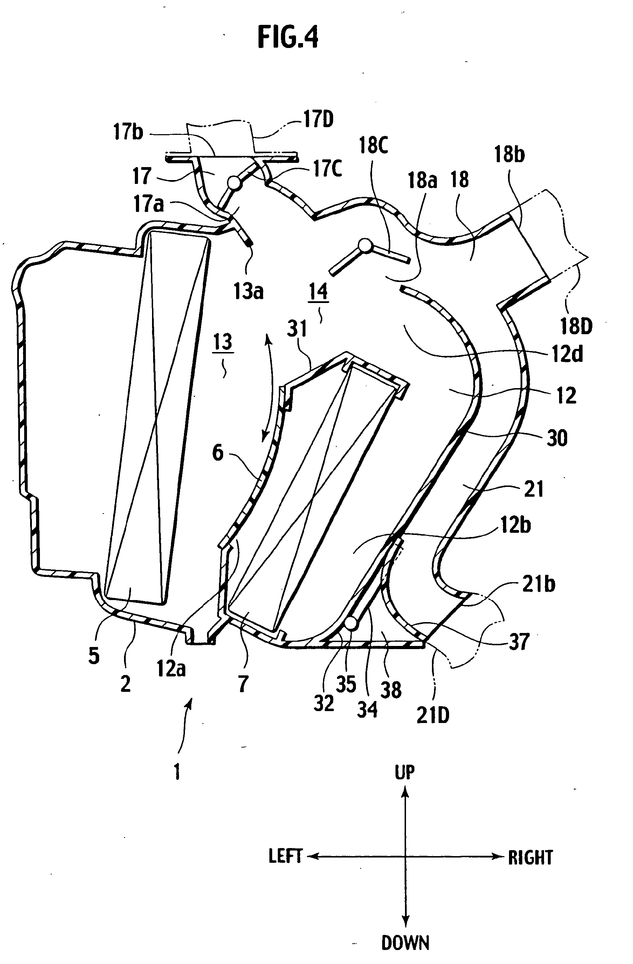

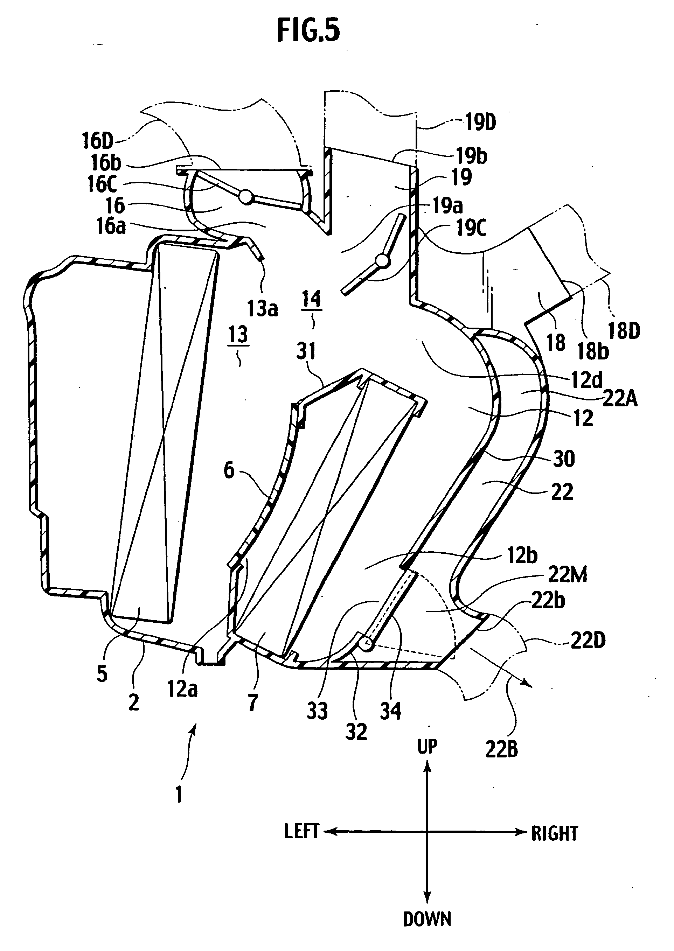

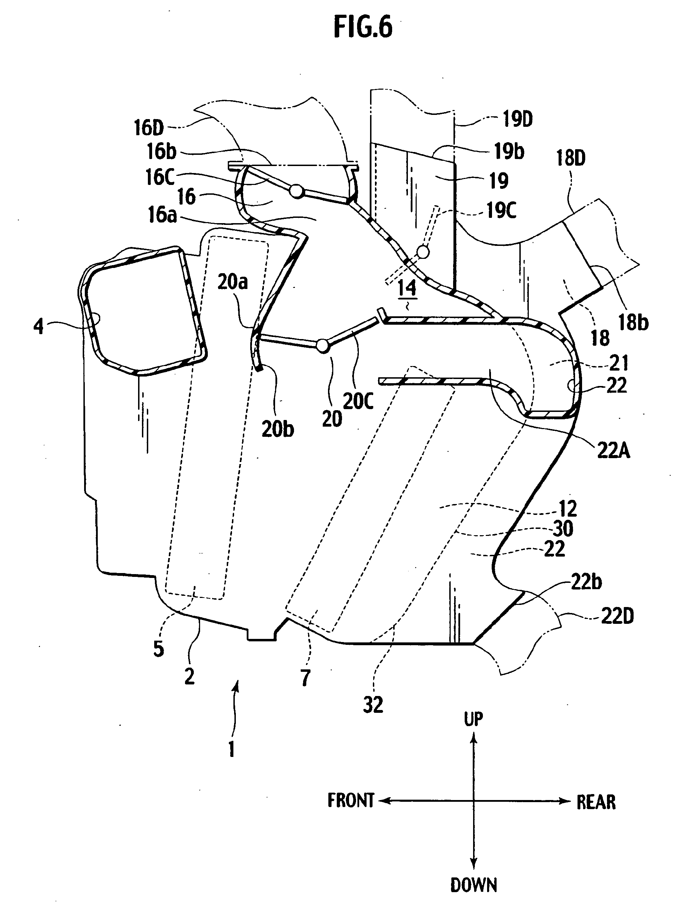

The structure of the air-conditioning unit 1 will be described in more detail below with reference to FIGS. 4 to 6.

As shown in FIG. 4, an evaporator 5 as a cooling heat exchanger, an air mixing door 6 as a temperature adjuster, and a heater core 7 as a heating heat exchanger are arranged in the air-conditioning case 2. The evaporator 5 is interposed in a refrigerant cycle not shown, in which a low-temperature low-pressure refrigerant is circulated to cause the refrigerant to absorb heat from the air to cool and dehumidify the air. The heater core 7 is interposed in a hot water line not shown, and radiates heat from the hot water to the air. The hot water in the hot water line is heated by exhaust heat from an engine as the heat source.

The evaporator 5 is positioned almost upright at a slightly backward tilt to allow air to pass therethrough from the front to the rear.

The heater core 7 is positioned at a greater backward tilt than the evaporator 5. The heater core 7 is provided with a smaller height and a smaller airflow area than the evaporator 5. The heater core 7 is opposed to the evaporator 5 in a position rearward of the evaporator 5 with a space therebetween to avoid interference with an upper side of the evaporator 5.

A downstream portion of the evaporator 5 branches into a hot air passage 12 and a bypass passage 13. The hot air passage 12 and the bypass passage 13 are aligned above and below. The hot air passage 12 allows cooled air passing through the evaporator 5 to pass through the heater core 7, to circulate hot air. The bypass passage 13 allows cooled air passing through the evaporator 5 to bypass the heater core 7.

The bypass passage 13 is formed linearly toward vent outlet passages 18, 19 through an air mixing chamber 14.

The hot air passage 12 is formed in a curve toward the bypass passage 13 above by a hot air guide wall 30. The guide wall 30 is disposed close and opposite to the heater core 7 in a substantially parallel manner. The guide wall 30 is curved in over a partition wall 31 which divides the bypass passage 13 from the hot air passage 12. With this, an outlet 12d of the hot air passage 12 is directed toward inlets 16a of defroster outlet passages 16.

The air mixing door 6 used as a temperature adjuster is provided downstream of the evaporator 5 and upstream of the heater core 7. The air mixing door 6 is formed in an arc bulging out downstream, and is supported on a door case not shown which is also formed in an arc bulging out downstream. An upper half portion of the door case is provided with an opening constituting the outlet 13a of the bypass passage 13; and a lower half portion thereof is provided with an opening constituting the inlet 12a of the hot air passage 12. The air mixing door 6 is slid vertically over the outlet 13a of the bypass passage 13 and the inlet 12a of the hot air passage 12 to adjust the distribution of airflow to the bypass passage 13 and the hot air passage 12.

The downstream confluence of the bypass passage 13 and the hot air passage 12 constitutes the air mixing chamber 14 for mixing cooled air and heated air. A plurality of front outlet passages and a plurality of rear outlet passages diverge from the air mixing chamber 14.

The front outlet passages include a pair of defroster outlet passages 16, an upper vent outlet passage 17, vent outlet passages 18, 19, and a pair of foot outlet passages 20. The rear outlet passages include a rear vent outlet passage 21 and a pair of rear foot outlet passages 22.

The outlet passages 16 to 22 will be described in more detail below.

The defroster outlet passages 16 diverge upward from the air mixing chamber 14. The outlet ducts 16D for discharging conditioned air toward the windshield are connected to the outlets 16b of the defroster outlet passages 16. Defroster doors 16C are provided at the inlets 16a of the defroster outlet passages 16. The defroster doors 16C allow the defroster outlet passages 16 to be opened and closed.

The upper vent outlet passage 17 diverges upward from the air mixing chamber 14. The outlet duct 17D for discharging air upward for the front seat occupants is connected to the outlet 17b of the upper vent outlet passage 17. An upper vent door 17C is provided at an inlet 17a of the upper vent outlet passage 17. The upper vent door 17C allows the upper vent outlet passage 17 to be opened and closed.

The outlets 16b of the defroster outlet passages 16 are provided on the right and left sides of the outlet 17b of the upper vent outlet passage 17 (see FIG. 2) . The defroster doors 16C and the upper vent door 17C are integrally formed on a rotary shaft for integrated opening and closing operations.

The vent outlet passages 18, 19 are a center vent outlet passage 18 for discharging conditioned air toward the upper bodies of the front seat occupants, and a pair of side vent outlet passages 19 for discharging conditioned air toward the side windows. An inlet 18a of the center vent outlet passage 18 and inlets 19a of the side vent outlet passages 19 are aligned laterally. The inlets 19a of the side vent outlet passages 19 are provided on the right and left sides of the inlet 18a of the center vent outlet passage 18. Vent Doors 18C, 19C can be opened and closed are provided at the inlet 18a of the center vent outlet passage 18 and the inlets 19a of the side vent outlet passages 19. The vent doors 18C, 19C share a single rotary shaft for integrated opening and closing operations. The vent doors 18C, 19C are bent to be parallel with the respective passages 18, 19 when the passages 18, 19 are fully opened, so as to further improve the performance in discharging cool air from the vent outlet passages 18, 19 (discharge performance in cooling).

The outlet duct 18D is situated toward the upper bodies of the front seat occupants and is connected to the outlet 18b of the center vent outlet passage 18 which is extended rearward from the inlet 18a. The outlet ducts 19D are situated toward the side windows not shown and are connected to the outlets 19b of the side vent outlet passages 19 which are extended upward from the inlets 19a. The rear vent outlet passage 21 diverges from the center vent outlet passage 18.

The foot outlet passages 20 diverge from the air mixing chamber 14, through cylindrical inlets 20a provided on the right and left sides of the air mixing chamber 14, toward the feet of the front seat occupants. In addition to the foot outlet passages 20, the rear foot outlet passages 22 diverge from the inlets 20a of the foot outlet passages 20. Foot doors 20C are provided at the inlets 20a of the foot outlet passages 20. Each of the foot doors 20C allows the foot outlet passages 20, 22 to be closed simultaneously, or allows one of them to be opened with the other closed, or allows the foot outlet passages 20, 22 to be opened simultaneously.

The rear foot outlet passages 22 are provided on the right and left sides of the rear vent outlet passage 21. The upstream portions of the rear vent outlet passage 21 and rear foot outlet passages 22 are all provided along the hot air passage 12, at the rear of the hot air passage 12, and separated from the hot air passage 12 only by the hot air guide wall 30. Communication paths 33 for connecting an upstream portion 12b or a middle portion of the hot air passage 12 to middle portions 22M of the rear foot outlet passages 22 are formed in the vicinity of a rounded curved portion 32 formed at the bottom of the hot air guide wall 30 of the hot air passage 12. Doors 34 are provided at the communication paths 33 for opening and closing the communication paths 33. The doors 34 of the communication paths 33 are integrally formed on a rotary shaft 35. As shown in FIGS. 4 and 7, the rotary shaft 35 extends through a space 38 between the rounded curved portion 32 of the hot air guide wall 30 and a rounded curved portion 37 of the rear vent outlet passage 21 which is curved in the opposite direction to that of the rounded curved portion 32. The doors 34 of the communication paths 33 serve as distribution doors. Depending on their opening and closing positions, (1) all the hot air flowing through the communication paths 33 into the middle portions 22M of the rear foot outlet passages 22 can be directed to upstream portions 22A of the rear foot outlet passages 22; or (2) the hot air can be distributed upstream and downstream of the rear foot outlet passages 22; or (3) almost all of the hot air can be directed toward downstream portions 22B of the rear foot outlet passages 22. The communication paths 33 are opened toward the downstream portions 22B of the rear foot outlet passages 22. When fully opened, the doors 34 of the communication paths 33 are facing toward the downstream portions 22B of the rear foot outlet passages 22. When the doors 34 of the communication paths 33 are fully opened, almost all of the inflow hot air flows directly to the downstream portions 22B of the rear foot outlet passages 22.

### [Operation]

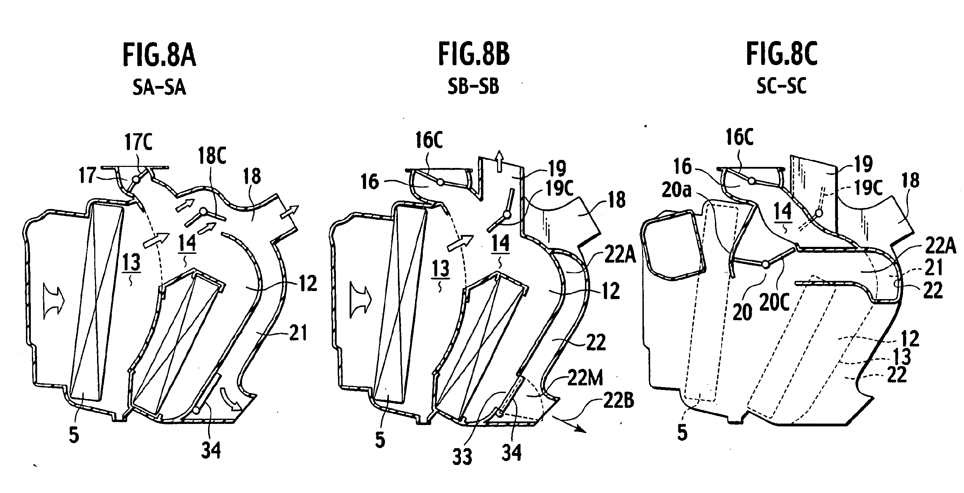

The flow of conditioned air in principal modes in the automotive air-conditioning system configured as described above will be described with reference to FIGS. 8A to 12C.

### Vent Mode (FIGS. 8A to 8C)

First, with reference to FIGS. 8A to 8C, a vent mode will be described. The vent mode is a mode in which conditioned air is discharged from the vent outlet passages 18,19. In the vent mode, the air-conditioning mode is set to a full-cooling mode. Specifically, the air mixing door 6 fully closes the hot air passage 12 and fully opens the bypass passage 13 so as to only discharge cooled air. The opening of the doors 16C to 20C and 34 is adjusted so that the upper vent outlet passage 17 is fully closed and the center vent outlet passage 18 is fully opened as shown in FIG. 8A; the defroster outlet passages 16 are fully closed and the side vent outlet passages 19 are fully opened as shown in FIG. 8B; and the foot outlet passages 20 and the rear foot outlet passages 22 are fully closed as shown in FIG. 8C.

With this, cooled air flowing into the air mixing chamber 14 through the bypass passage 13 is discharged into the passenger compartment 55 through the center vent outlet passage 18, the side vent outlet passages 19, and the rear vent outlet passage 21.

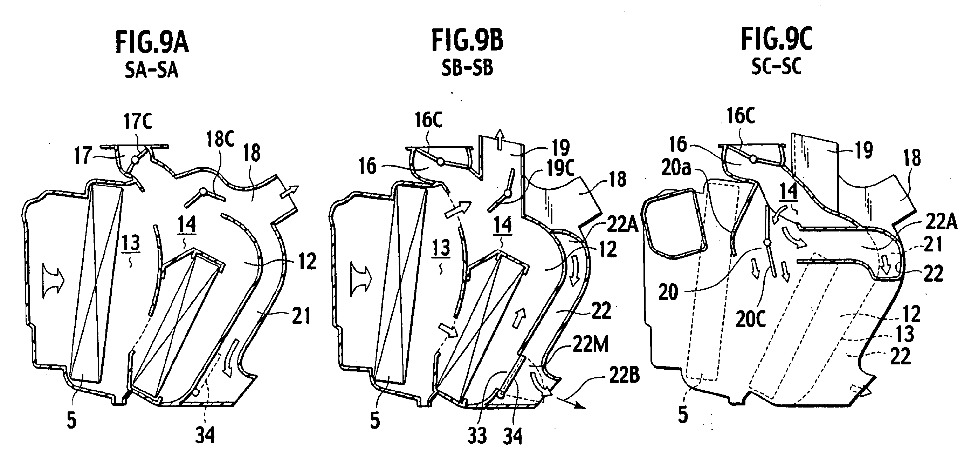

### Bi-level Mode (FIGS. 9A to 9C)

With reference to FIGS. 9A to 9C, a bi-level mode will be described. The bi-level mode is a mode in which conditioned air is discharged from both the vent outlet passages and the foot outlet passages 20. In the bi-level mode, the air-conditioning mode is set to an air-conditioning mode. Specifically, the air mixing door 6 opens both the hot air passage 12 and the bypass passage 13 so that cooled air and heated air are mixed in the air mixing chamber 14 to discharge conditioned air. The opening of the doors 16C to 20C and 34 is adjusted so that the upper vent outlet passage 17 is fully closed and the center vent outlet passage 18 is fully opened as shown in FIG. 9A; the defroster outlet passages 16 are fully closed and the side vent outlet passages 19 are fully opened as shown in FIG. 9B; and the foot outlet passages 20 and the rear foot outlet passages 22 are opened as shown in FIG. 9C.

With this, air mixed in the air mixing chamber 14 and conditioned to a desired temperature is discharged from the air mixing chamber 14 through the center vent outlet passage 18, the side vent outlet passages 19 and the rear vent outlet passage 21 into the passenger compartment 55. Also, the air is discharged through the foot outlet passages 20 and the rear foot outlet passages 22 into the passenger compartment 55.

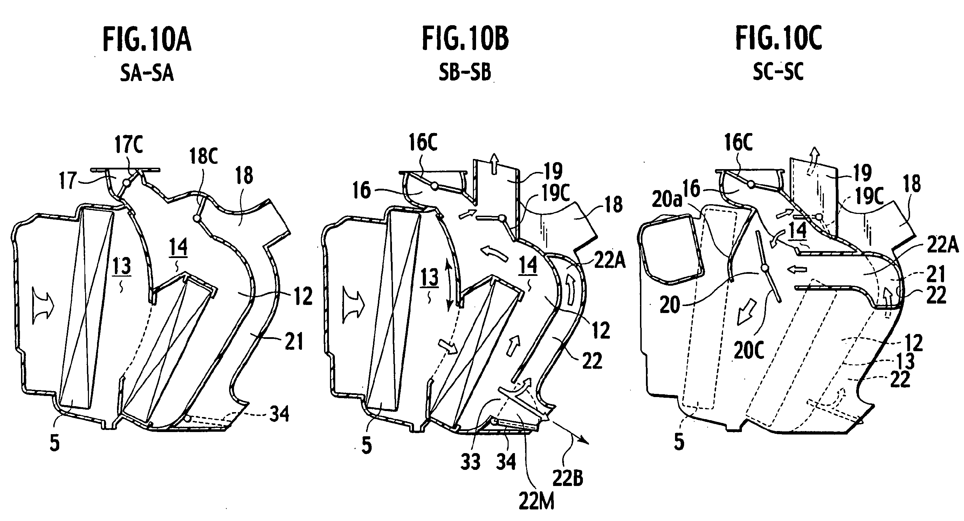

### Foot Mode (FIGS. 10A to 10C)

With reference to FIGS. 10A to 10C, a foot mode will be described. The foot mode is a mode in which conditioned air is discharged from the foot outlet passages 20. In the foot mode, the air-conditioning mode is set to a full-heating mode. Specifically, the air mixing door 6 fully opens the hot air passage 12 and fully closes the bypass passage 13 so as to only discharge hot air. The opening of the doors 16C to 20C and 34 is adjusted so that the upper vent outlet passage 17 is fully closed and the center vent outlet passage 18 is fully closed as shown in FIG. 10A; the defroster outlet passages 16 are fully closed and the side vent outlet passages 19 are opened as shown in FIG. 10B; and the foot outlet passages 20 and the rear foot outlet passages 22 are opened as shown in FIG. 10C. Also, the communication paths 33 are fully opened.

With this, as shown in FIG. 10B, some of the heated air flowing into the hot air passage 12 flows into the air mixing chamber 14 directly through the hot air passage 12, and the rest of the hot air flows into the middle portions 22M of the rear foot outlet passages 22 through the communication paths 33.

The hot air flowing into the air mixing chamber 14 through the hot air passage 12 (see FIG. 10B) is then discharged through the side vent outlet passages 19 and the foot outlet passages 20 into the passenger compartment 55 as shown in FIG. 10C.

The hot air flowing through the communication paths 33 into the middle portions 22M of the rear foot outlet passages 22 is divided into a flow to the upstream portions 22A and a flow to the downstream portions 22B of the rear foot outlet passages 22. The hot air flowing into the downstream portions 22B of the rear foot outlet passages 22 is directly discharged from below the rear seats into the passenger compartment 55. The hot air flowing into the upstream portions 22A of the rear foot outlet passages 22 is discharged from the inlets 20a of the foot outlet passages 20 through the foot outlet passages 20 toward the feet of the front seat occupants as shown in FIG. 10C. (Depending on the opening and closing position of the doors 34 of the communication paths 33, all the hot air flowing through the communication paths 33 can be directed to the upstream portions 22A of the rear foot outlet passages 22. In this embodiment, with the doors 34 in the middle position between the open and closed positions, the downstream portions 22B of the rear foot outlet passages 22 can be fully closed to direct all the hot air to the upstream portions 22A of the rear foot outlet passages 22.)

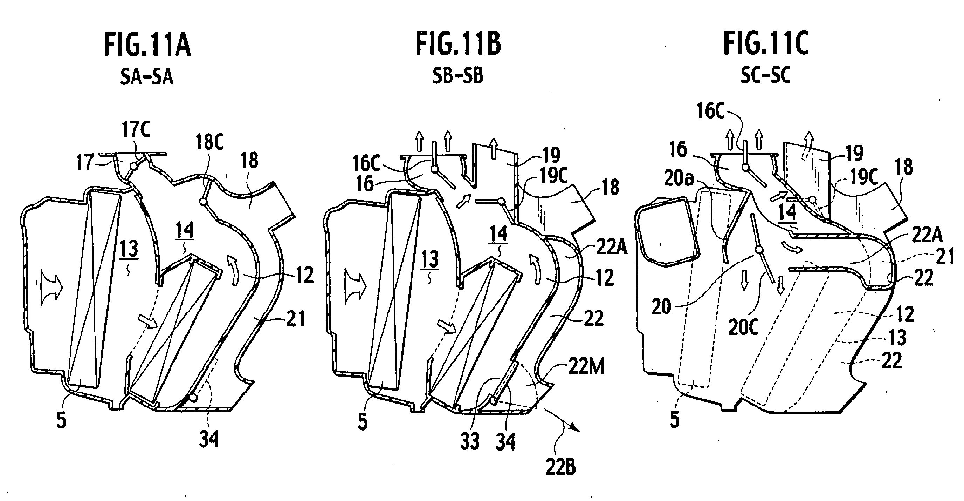

### Defroster-Foot Mode (FIGS. 11A to 11C)

With reference to FIGS. 11A to 11C, the defroster-foot mode will be described. The defroster-foot mode is a mode in which conditioned air is discharged from the defroster outlet passages 16 and the foot outlet passages 20. In the defroster-foot mode, the air-conditioning mode is set to a full-heating mode. Specifically, the air mixing door 6 fully opens the hot air passage 12 and fully closes the bypass passage 13 so as to only discharge hot air. The opening of the doors 16C to 20C and 34 is adjusted so that the upper vent outlet passage 17 is fully closed and the center vent outlet passage 18 is fully closed as shown in FIG. 11A; the defroster outlet passages 16 are opened and the side vent outlet passages 19 are opened as shown in FIG. 11B; and the foot outlet passages 20 and the rear foot outlet passages 22 are opened as shown in FIG. 11C.

With this, hot air flowing into the air mixing chamber 14 from the hot air passage 12 is discharged through the side vent outlet passages 19 into the passenger compartment 55. Also, the hot air is discharged through the foot outlet passages 20 and the rear foot outlet passages 22 into the passenger compartment 55.

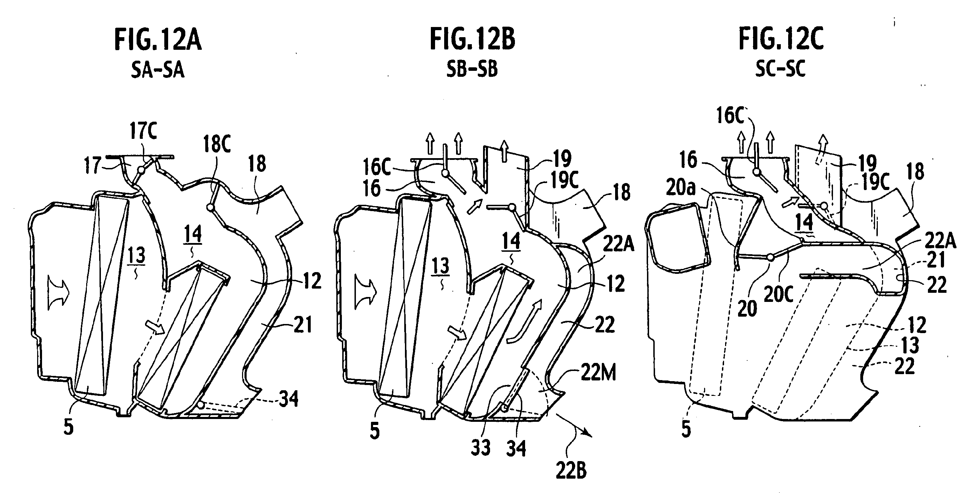

### Defroster Mode (FIGS. 12A to 12C)

With reference to FIGS. 12A to 12C, a defroster mode will be described. The defroster mode is a mode in which conditioned air is discharged from the defroster outlet passages 16. In the defroster mode, the air-conditioning mode is set to a full-heating mode. Specifically, the air mixing door 6 fully opens the hot air passage 12 and fully closes the bypass passage 13, so as to only discharge hot air. The opening of the doors 16C to 20C and 34 is adjusted so that the upper vent outlet passage 17 is fully closed and the center vent outlet passage 18 is fully closed as shown in FIG. 12A; the defroster outlet passages 16 are opened and the side vent outlet passages 19 are opened as shown in FIG. 12B; and the foot outlet passages 20 and the rear foot outlet passages 22 are fully closed as shown in FIG. 12C.

With this, hot air flowing into the air mixing chamber 14 from the hot air passage 12 is discharged through the side vent outlet passages 19 into the passenger compartment 55. Also, the hot air is discharged through the defroster outlet passages 16 into the passenger compartment 55.

The structure and operation of the automotive air-conditioning system in this embodiment will be summarized below.

First, according to the automotive air-conditioning system in this embodiment, the rear foot outlet passages 22 diverging from the air mixing chamber 14 are arranged along the hot air passage 12 such that the airflow direction therein is opposite to that in the hot air passage 12; and the communication paths 33 for connecting the hot air passage 12 to the rear foot outlet passages 22, and the doors 34 for opening and closing the communication paths 33 are provided. When the communication paths 33 are opened by the doors 34 as shown in FIG. 10B, at least some of the hot air flowing into the rear foot outlet passages 22 through the communication paths 33 can be directed to the upstream portions 22A of the rear foot outlet passages 22. That is, hot air passing through the heater core 7 can be directed toward the air mixing chamber 14 through the hot air passage 12 and the rear foot outlet passages 22. The cross-sectional area of a passage from the heater core 7 to the air mixing chamber 14 is the sum of the cross-sectional areas of the hot air passage 12 and the upstream portions 22A of the rear foot outlet passages 22. Thus, airflow resistance of hot air from the heater core 7 to the air mixing chamber 14 can be reduced.

Also, at least some of the hot air flowing into the rear foot outlet passages 22 through the communication paths 33 can directly flow toward the rear seats through the rear foot outlet passages 22. Thus, hot air to be delivered from the heating heat exchanger 7 to the rear seats can flow by a shortcut without flowing through the hot air passage 12, the air mixing chamber 14 and the upstream portions 22A of the rear foot outlet passages 22. As a result, airflow resistance of hot air flowing toward the rear seats can be reduced.

Second, according to the automotive air-conditioning system in this embodiment, the distribution doors (34) are provided for adjusting distribution of hot air flowing through the communication paths 33 into the rear foot outlet passages 22, between the upstream portions 22A of the rear foot outlet passages 22 and the downstream portions 22B of the rear foot outlet passages 22 when the communication paths 33 are opened by the doors 34 of the communication paths 33. The hot air introduced from the hot air passage 12 through the communication paths 33 into the rear foot outlet passages 22 can be desirably distributed to the upstream portions 22A and the downstream portions 22B of the rear foot outlet passages 22 by the distribution doors (34). This increases the variety of discharge modes in the automotive air-conditioning system.

Third, according to the automotive air-conditioning system in this embodiment, the doors 34 of the communication paths 33 are the distribution doors (34), and thus the structure can be simplified. As a result, the automotive air-conditioning system can be made compact and production costs are reduced.

Fourth, according to the automotive air-conditioning system in this embodiment, the hot air guide wall 30 for guiding hot air passing through the heater core 7 to the bypass passage 13 divides the hot air passage 12 from the rear foot outlet passages 22. This arrangement does not allow for any unused space between the hot air passage 12 and the rear foot outlet passages 22, and thus allows the automotive air-conditioning system to be made compact. In this embodiment, the hot air passage 12 and the rear foot outlet passages 22 are arranged in the front and behind. Therefore, the automotive air-conditioning system is made compact in the vehicle's longitudinal direction.

Fifth, according to the automotive air-conditioning system in this embodiment, the hot air guide wall 30 is opposed in proximity to the downstream face of the heater core 7. Thus, the hot air passage 12 is especially made smaller. As a result, the automotive air-conditioning system becomes more compact. The small size of the hot air passage 12 generally causes an increased the airflow resistance of the hot air passage 12 when the hot air passage 12 is formed with a sharp curve. In this case, the enlarged airflow area of the hot air passage 12 becomes more effective.

## Claims

1. An automotive air-conditioning system comprising:
a bypass passage (13) through which cool air flows, bypassing a heating heat exchanger (7);
a hot air passage (12) through which hot air passing through the heating heat exchanger (7) flows, the hot air passage having a downstream portion curved toward the bypass passage (13);
an air mixing chamber (14) located at a confluence of the bypass passage (13) and the hot air passage (12), for mixing hot air and cool air;
at least one front outlet passage (16, 17, 18, 19, 20) diverging from the air mixing chamber (14) toward the front side of a passenger compartment;
**characterized by**
at least one rear outlet passage (22) diverging from the air mixing chamber (14) toward the rear side of the passenger compartment, the rear outlet passage (22) having an upstream portion (22A) arranged along the hot air passage (12);
a communication path (33) configured to connect the hot air passage (12) to a middle portion (22M) of said rear outlet passage (22); and
a door (34) configured to open and close the communication path (33),
the upstream portion (22A) of the rear outlet passage (22) being connected with said front outlet passage (20), wherein hot air flowing through the communication path (33) into the rear outlet passage (22) can be distributed to the front outlet passage (20) via the upstream portion (22A) of the rear outlet passage (22).

2. An automotive air-conditioning system according to claim 1, **characterized in that** said door (34) is a distribution door configured to adjust distribution of hot air flowing through the communication path (33) into the rear outlet passage (22), between the upstream portion (22A) of the rear outlet passage (22) and a downstream portion (22B) of the rear outlet passage (22).

3. An automotive air-conditioning system according to claim 1 or 2, **characterized by** a hot air guide wall (30) configured to guide hot air passing through the heating heat exchanger (7) to the bypass passage (13), the hot air guide wall dividing the hot air passage (12) from the rear outlet passage (22).

4. An automotive air-conditioning system according to claim 3, **characterized in that** the hot air guide wall (30) is opposed to a downstream face of the heating heat exchanger (7).

5. An automotive air-conditioning system according to at least one of the claims 1 to 4, **characterized in that** the door (34) rotates within the at least one rear outlet passage (22).

6. An automotive air-conditioning system according to at least one of the claims 1 to 5, **characterized in that** an opening degree of the door (34) establishes a distribution of air flow from the upstream of hot air passage (12) to the downstream of hot air passage (12) and the communication path (33).

7. An automotive air-conditioning system according to at least one of the claims 1 to 6, **characterized in that** a plurality of rear out let passages (21, 22) is provided including a rear foot outlet passage (22) diverging from the air mixing chamber (14) toward the rear lower side of the passenger compartment; and a rear vent outlet passage (21) diverging from the air mixing chamber (14) toward the rear upper side of the passenger compartment, wherein said communication path (33) is connected to one of the rear vent outlet passage (21) and the rear foot outlet passage (22).

8. An automotive air-conditioning system according to claim 7, **characterized in that** said communication path (33) is connected to the rear foot outlet passage (22).

9. An automotive air-conditioning system according to claim 8, **characterized in that** the upstream portion of the rear vent outlet passage (21) and the upstream portion of the rear foot outlet passage (22) lines along a widthwise of a vehicle, at rear side with respect to the hot air passage (12).

10. An automotive air-conditioning system according to claim 8 or 9, **characterized in that** the front out let passage (20) diverge from the air mixing chamber (14) toward opposite sides of air mixing chamber (14) along the width wise of the vehicle, and are connected with the upstream portions (22A) of the rear foot outlet passages (22).

11. An automotive air-conditioning system according to claim 10, **characterized in that** said front out let passage (20) is a foot out let passage (20) diverging from the air mixing chamber (14) toward the front lower side of the passenger compartment.

12. An automotive air conditioning system according to at least one of the claims 7 to 11, **characterized in that** the rear vent outlet passage (21) divides the rear foot outlet passage (22) in to two passages (22, 22) in between.

13. An automotive air-conditioning system according to claim 12, **characterized in that** each of the two rear foot outlet passages (22,22) is provided with a communication path (33, 33) at a rounded curved portion (32) of the hot air passage (12), wherein each of the communication paths (33, 33) is provided with a door (34, 34) integrally formed on a common rotary shaft (35), the rotary shaft (35) extends trough a space (38) between the rounded curved portion (32) of the hot air passage (12) and a rounded curved portion (37) of the rear vent outlet passage (21) which is curved in the opposite direction to that of the round curved portion (32) of the hot air passage (12).

## Patentansprüche

1. Kraftfahrzeug- Klimatisierungssystem, aufweisend:
einen Bypasskanal (13), durch den kühle Luft unter Umgehung eines erwärmenden Wärmetauschers (7) strömt;
einen Warmluftkanal (12), durch den hindurch warme Luft, die durch den Wärmetauscher (7) hindurchgeht, wobei der Warmluftkanal einen in Richtung des Bypasskanals (13) gekrümmten stromabwärtigen Abschnitt hat;
eine Luftmischkammer (14), angeordnet an einer Zusammenführung von Bypasskanal (13) und dem Warmluftkanal (12) zum Mischen von Warmluft und Kaltluft; zumindest einem Vorderauslass- Kanal- Auslasskanal (16, 17, 18, 19, 20), der von der Luftmischkammer (14) in die Richtung zu der vorderen Seite eines Fahrgastraumes abzweigt;
**gekennzeichnet durch**
zumindest einen Rückauslass- Kanal (22), der von der Luftmischkammer (14) in die Richtung zu der hinteren Seite des Fahrgastraumes abzweigt, wobei der Rückauslass- Kanal (22), der einen stromaufwärtigen Abschnitt (22A) hat, angeordnet entlang des Warmluftkanals (12); einen Verbindungspfad (33), konfiguriert, um den Warmluftkanal (12) mit einem Mittelabschnitt (22M) des Rückauslass-Kanals (22) zu verbinden; und
eine Klappe (34), konfiguriert, um den Verbindungspfad (33) zu öffnen oder zu schließen, wobei der stromaufwärtige Abschnitt (22A) des Rückauslass- Kanals (22) mit dem Vorderauslass- Kanal- Auslasskanal (20) verbunden ist, wobei Warmluft, die **durch** den Verbindungspfad (33) in den Rückauslass- Kanal (22) strömt, zu dem Vorderauslass- Kanal- Auslasskanal (20) über den stromaufwärtigen Abschnitt (22A) des Rückauslass- Kanals (22) verteilt werden kann.

2. Kraftfahrzeug- Klimatisierungssystem nach Anspruch 1, **dadurch gekennzeichnet, dass** die Klappe (34) eine Verteilungsklappe ist, konfiguriert um die Verteilung von warmer Luft, die durch den Verbindungspfad (33) in den Rückauslass-Kanal (22) strömt, zwischen dem stromaufwärtigen Abschnitt (22A) und dem Rückauslass- Kanal (22) und einem stromabwärtigen Abschnitt (22B) des Rückauslass- Kanals (22) einzustellen.

3. Kraftfahrzeug- Klimatisierungssystem nach Anspruch 1 oder 2, **gekennzeichnet, durch** eine Warmluftführungswand (30), konfiguriert um Warmluft, die **durch** den erwärmenden Wärmetauscher (7) hindurchgeht, in den Bypasskanal (13) zu führen, wobei die Warmluftführungswand den Warmluftkanal (12) von dem Rückauslass- Kanal (22) teilt.

4. Kraftfahrzeug- Klimatisierungssystem nach Anspruch 3, **dadurch gekennzeichnet, dass** die Warmluftführungswand (30) einer stromabwärtigen Fläche des Wärmetauschers (7) gegenüberliegt.

5. Kraftfahrzeug- Klimatisierungssystem nach zumindest einem der Ansprüche 1 bis 4, **dadurch gekennzeichnet, dass** sich die Klappe (34) innerhalb des zumindest einen Rückauslass- Kanals (22) dreht.

6. Kraftfahrzeug- Klimatisierungssystem nach zumindest einem der Ansprüche 1 bis 5, **dadurch gekennzeichnet, dass** ein Öffnungsgrad der Klappe (34) eine Verteilung der Luftströmung von stromauf des Warmluftkanals (12) nach stromab des Warmluftkanals (12) und dem Verbindungspfad (33) herstellt.

7. Kraftfahrzeug- Klimatisierungssystem nach zumindest einem der Ansprüche 1 bis 6, **dadurch gekennzeichnet, dass** eine Mehrzahl von Rückauslass- Kanälen (21, 22) vorgesehen ist, die einen hinteren Fußauslasskanal (22) enthalten, der von der Luftmischkammer (14) in die Richtung zu der unteren Seite des Fahrgastraumes abzweigt; und einen hinteren Lüftungsauslasskanal (21), der von der Luftmischkammer (14) in die Richtung zu der oberen Seite des Fahrgastraumes abzweigt, wobei der Verbindungspfad (33) mit einem von dem hinteren Lüftungsauslasskanal (21) oder dem hinteren Fußauslasskanal (22) verbunden ist.

8. Kraftfahrzeug- Klimatisierungssystem nach Anspruch 7, **dadurch gekennzeichnet, dass** der Verbindungspfad (33) mit dem hinteren Fußauslasskanal (22) verbunden ist.

9. Kraftfahrzeug- Klimatisierungssystem nach Anspruch 8, **dadurch gekennzeichnet, dass** der stromaufwärtige Abschnitt des hinteren Lüftungsauslasskanals (21) und der stromaufwärtige Abschnitt des hinteren Fußauslasskanals (22) entlang einer Breitenrichtung eines Fahrzeuges an der hinteren Seite in Bezug zu dem Warmluftkanal (12) sich erstrecken.

10. Kraftfahrzeug- Klimatisierungssystem nach Anspruch 8 oder 9, **dadurch gekennzeichnet, dass** der Vorderauslass- Kanal- Auslasskanal (20) von der Luftmischkammer (14) in die Richtung der gegenüberliegenden Seiten der Luftmischkammer (14) entlang der Breitenrichtung des Fahrzeuges sich verzweigt, und diesen mit den stromaufwärtigen Abschnitten (22A) der hinteren Fußauslasskanäle (22) verbunden sind.

11. Kraftfahrzeug- Klimatisierungssystem nach Anspruch 10, **dadurch gekennzeichnet, dass** der Vorderauslass- Kanal- Auslasskanal (20) ein Fußauslasskanal (20) ist, der von der Luftmischkammer (14) in die Richtung zu der vorderen unteren Seite des Fahrgastraumes abzweigt.

12. Kraftfahrzeug- Klimatisierungssystem nach zumindest einem der Ansprüche 7 bis 11, **dadurch gekennzeichnet, dass** der hintere Lüftungsauslasskanal (21) den hinteren Fußauslasskanal (22) dazwischen in zwei Kanäle (22, 22) teilt.

13. Kraftfahrzeug- Klimatisierungssystem nach Anspruch 12, **dadurch gekennzeichnet, dass** jeder der zwei hinteren Fußauslasskanäle (22, 22) mit einem Verbindungspfad (33, 33) an einem gerundeten, gekrümmten Abschnitt (32) des Warmluftkanals (12) versehen ist, wobei jeder der Verbindungspfade (33, 33) mit einer Klappe (34, 34), einstückig gebildet auf einer gemeinsamen Drehwelle (35), versehen ist, wobei sich die Drehwelle (35) durch einen Raum (38) zwischen dem gerundeten, gekrümmten Abschnitt (32) des Warmluftkanals (12) und einem gerundeten, gekrümmten Abschnitt (37) des hinteren Lüftungsauslasskanals (21) erstreckt, der in der entgegengesetzten Richtung zu derjenigen des gerundeten, gekrümmten Abschnittes (32) des Warmluftkanals (12) gekrümmt ist.

## Revendications

1. Système de climatisation pour automobile comprenant :
un passage de dérivation (13) à travers lequel de l'air s'écoule, en court-circuitant un échangeur de chaleur de chauffage (7) ;
un passage d'air chaud (12) à travers lequel s'écoule l'air chaud qui traverse l'échangeur de chaleur de chauffage (7), le passage d'air chaud comprenant une portion aval incurvée en direction du passage de dérivation (13) ;
une chambre de mélange d'air (14) située au confluent du passage de dérivation (13) et du passage d'air chaud (12) afin de mélanger l'air chaud et l'air froid;
au moins un passage de sortie avant (16, 17, 18, 19, 20) qui diverge de la chambre de mélange d'air (14) en direction du côté avant d'un compartiment passager;
**caractérisé par** :
au moins un passage de sortie arrière (22) qui diverge de la chambre de mélange d'air (14) en direction du côté arrière du compartiment passager, le passage de sortie arrière (22) comprenant une portion amont (22A) disposée le long du passage d'air chaud (12) ;
un canal de communication (33) conçu pour relier le passage d'air chaud (12) à une portion centrale (22M) dudit passage de sortie arrière (22) ; et
une porte (34) conçue pour ouvrir et fermer le canal de communication (33), la portion amont (22A) du passage de sortie arrière (22) étant reliée audit passage de sortie avant (20), dans lequel l'air chaud s'écoulant dans le canal de communication (33) vers le passage de sortie arrière (22) peut être distribué vers le passage de sortie avant (20) par l'intermédiaire de la portion amont (22A) du passage de sortie arrière (22).

2. Système de climatisation pour automobile selon la revendication 1, **caractérisé en ce que** ladite porte (34) est une porte de distribution conçue pour ajuster la distribution de l'air chaud qui s'écoule à travers le canal de communication (33) vers le passage de sortie arrière (22), entre la portion amont (22A) du passage de sortie arrière (22) et une portion aval (22B) du passage de sortie arrière (22).

3. Système de climatisation pour automobile selon la revendication 1 ou 2, **caractérisé par** une paroi de guidage d'air chaud (30) conçue pour guider l'air chaud qui traverse l'échangeur de chaleur de chauffage (7) vers le passage de dérivation (13), cette parois de guidage d'air chaud divisant le passage d'air chaud (12) à partir du passage de sortie arrière (22).

4. Système de climatisation pour automobile selon la revendication 3, **caractérisé en ce que** la paroi de guidage d'air chaud (30) est opposée à une face aval de l'échangeur de chaleur de chauffage (7).

5. Système de climatisation pour automobile selon au moins une des revendications 1 à 4, **caractérisé en ce que** la porte (34) tourne à l'intérieur du passage de sortie arrière (22).

6. Système de climatisation pour automobile selon au moins une des revendications 1 à 5, **caractérisé en ce que** le degré d'ouverture de la porte (34) établit une distribution d'un écoulement d'air de l'amont du passage d'air chaud (12) vers l'aval du passage d'air chaud (12) et du canal de communication (33).

7. Système de climatisation pour automobile selon au moins une des revendications 1 à 6, **caractérisé en ce qu'**une pluralité de passages de sortie arrière (21, 22) est prévue, qui comprend un passage de sortie inférieur arrière (22) qui diverge dé la chambre de mélange d'air (14) vers le côté arrière inférieur du compartiment passager; et un passage de sortie de ventilation arrière (21) divergeant de la chambre de mélange d'air (14) vers le côté arrière supérieur du compartiment passager, dans lequel ledit canal de communication (33) est relié au passage de sortie arrière de ventilation (21) ou au passage de sortie inférieur arrière (22).

8. Système de climatisation pour automobile selon la revendication 7, **caractérisé en ce que** ledit canal de communication (33) est relié au passage de sortie inférieur (22).

9. Système de climatisation pour automobile selon la revendication 8, **caractérisé en ce que** la portion amont du passage de sortie arrière de ventilation (21) et la portion amont du passage de sortie inférieur arrière (22) sont alignées sur la largeur d'un véhicule, au niveau du côté arrière par rapport au passage d'air chaud (12).

10. Système de climatisation pour automobile selon la revendication 8 ou 9, **caractérisé en ce que** les passages de sortie avant (20) divergent de la chambre de mélange (14) en direction des côtés opposés de la chambre de mélange d'air (14) sur la largeur du véhicule et sont reliés aux portions amont (22A) des passages de sortie inférieur arrière (22).

11. Système de climatisation pour automobile selon la revendication 10, **caractérisé en ce que** ledit passage de sortie avant (20) est un passage de sortie inférieur (20) divergeant de la chambre de mélange d'air (14) en direction du côté inférieur avant du compartiment passager.

12. Système de climatisation pour automobile selon au moins une des revendications 7 à 11, **caractérisé en ce que** ledit passage de sortie de ventilation arrière (21) divise le passage de sortie inférieur arrière (22) en deux passages (22, 22).

13. Système de climatisation pour automobile selon la revendication 12, **caractérisé en ce que** chacun des deux passages de sortie inférieurs arrière (22, 22) est muni d'un canal de communication (33, 33) au niveau d'une portion incurvée arrondie (32) du passage d'air chaud (12), dans lequel chacun des canaux de communication (33, 33) est muni d'une porte (34, 34) formée intégralement sur un arbre rotatif commun (35), l'arbre rotatif (35) s'étend à travers un espace (38) entre la portion incurvée arrondie (32) du passage d'air chaud (12) et une portion incurvée arrondie (37) du passage de sortie de ventilation arrière (21) qui est incurvée dans la direction opposée à celle de la portion incurvée arrondie (32) du passage d'air chaud (12).
